# EUROPEAN PATENT APPLICATION

(11) **EP 1 780 112 A2**
(43) Date of publication of application: **02.05.2007**
(21) Application number: 06022228.8
(22) Date of filing: 24.10.2006
(51) Int. Cl.: B62M 3/00

(54) **Bicycle bottom bracket assembly**

(30) Priority: 28.10.2005 US 730850 P; 23.05.2006 US 438213
(71) Applicant: SHIMANO INC., Osaka 590-8577 (JP)
(72) Inventor: Kitagawa, Kozo, Sakai City Osaka 590-8577 (JP)
(74) Representative: Harrison, Robert John

(57) **Abstract**

A bicycle bottom bracket assembly has a crank axle, a pair of bearing units (55,56) and a pair of retaining clips (57,58). The bearing units are configured to be mounted in a tubular hanger part or bottom bracket tube of a bicycle frame. The crank axle (54) has a central portion (54c), a first axial end portion with a first recess (R1) disposed on a first side of the central portion and a second axial end portion with a second recess (R2) disposed on a second side of the central portion. One of bearing units is disposed on the first axial end portion of the crank axle at a location axially inward of the first recess, while the other bearing unit is disposed on the second axial end portion of the crank axle at a location axially inward of the second recess. One of retaining clips is disposed in the first recess and is configured to retain the one of the bearing units on the first axial end portion of the crank axle. The other retaining clip is disposed in the second recess and is configured to retain the other bearing unit on the second axial end portion of the crank axle.

## Description

### BACKGROUND OF THE INVENTION

### Field of the Invention

This invention generally relates to a bicycle bottom bracket assembly. More specifically, the present invention relates to a bicycle bottom bracket assembly having a pair of industrial bearings being retained on a crank axle that is rotatably located within a cylindrical hanger part or bottom bracket tube of the bicycle frame. Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle bottom bracket that is often called a bottom bracket.

. Many different types of bottom bracket are currently available on the market. Generally speaking, a conventional bicycle bottom bracket assembly has a pair of bearings mounted into a hanger part of a bicycle frame for rotatably supporting a crank axle. One conventional bottom bracket is disclosed in Japanese Utility Model Laid-Open Publication No. S60-161685. In this Japanese Publication, a bottom bracket is disclosed in which a bearing unit has been fixed on a crank axle by a locking nut that is threadedly engaged with the outer surface of the crank axle. Another example of this type of bottom bracket is disclosed in U.S. Patent No. 5,924,801. However, with a bottom bracket of this type, it is necessary to form threads on the outer surface of the crank axle. Thus, this manner of fixing a bearing unit on a crank axle is troublesome to manufacturing.

Another example of a bottom bracket is disclosed in U.S. Patent Publication No. 2003/0097900A1. This U.S. Patent Publication discloses another example of a conventional bottom bracket in which ring shaped spacers are pressed against the bearing units to fix the bearing unit on the crank axle. In other words, in U.S. Patent Publication, the axial position of bearing units on the crank axle is defined by a couple of spacers. However, in such a conventional manner, if the crank axle accidentally loosens, the bearing units will also get movable axially.

In view of the above, it will be apparent to those skilled in the art from this disclosure that there exists a need for an improved bicycle crank axle bearing assembly or bottom bracket. This invention addresses this need in the art as well as other needs, which will become apparent to those skilled in the art from this disclosure.

### SUMMARY OF THE INVENTION

One object of the present invention is to provide a bicycle bottom bracket assembly that is relatively easy to assemble bearing units on a crank axle.

Another object of the present invention is to provide a bicycle bottom bracket assembly in which bearing units will be retained against axial movement on a crank axle even if the crank axle accidentally loosens.

Another object of the present invention is to provide a bicycle bottom bracket assembly that is relatively inexpensive to manufacture.

The forgoing objects can basically be attained by providing a bicycle bottom bracket assembly that includes a crank axle, a first bearing unit, a second bearing unit, a first retaining clip and a second retaining clip. The crank axle has a central portion, a first axial end portion with a first recess disposed on a first side of the central portion and a second axial end portion with a second recess disposed on a second side of the central portion. The first bearing unit is disposed on the first axial end portion of the crank axle at a location axially inward of the first recess. The second bearing unit is disposed on the second axial end portion of the crank axle at a location axially inward of the second recess. The first retaining clip is disposed in the first recess, and is configured to retain the first bearing unit on the first axial end portion of the crank axle. The second retaining clip is disposed in the second recess, and is configured to retain the second bearing unit on the second axial end portion of the crank axle.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is an overall right side elevational view of a bicycle with a bicycle bottom bracket assembly in accordance with a first embodiment of the present invention;

Figure 2 is an enlarged, partial perspective view of a hanger part of the bicycle frame of the bicycle illustrated Figure 1 with the bottom bracket installed in the hanger part in accordance with the first embodiment of the present invention;

Figure 3 is a transverse cross sectional view of the bottom bracket assembly in accordance with the first embodiment of the present invention;

Figure 4 is a partial enlarged side elevational view of a right side portion of the bottom bracket assembly in accordance with the first embodiment of the present invention;

Figure 5 is enlarged side elevational view of one of the bearings used in the bottom bracket assembly in accordance with the first embodiment of the present invention; and

Figure 6 is a transverse cross sectional view of the bottom bracket assembly in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

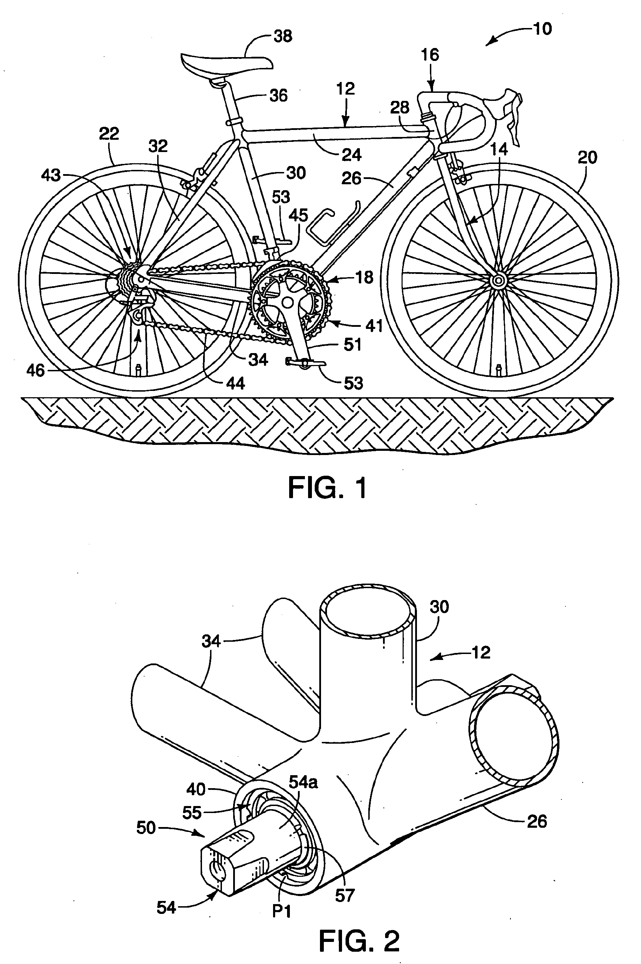

Referring initially to Figure 1, a bicycle 10 is illustrated that is equipped a first embodiment of the present invention. In this example, the bicycle 10 is a road bike that has a diamond-shaped frame 12 with a triangularly shaped front triangle and a triangularly shaped rear triangle that is arranged rearward of the front triangle. The frame 12 serves as the framework of the bicycle body. The frame 12 has a front fork 14 pivotally supported on a front part of the frame 12 such that the front fork 14 can rotate freely about an axis that is tilted slightly from vertical. The lower or bottom part of the front fork 14 is divided into two prongs. The bicycle 10 is also provided with a drop-type handlebar unit 16 connected to the front fork 14, and a drive unit 18 provided on a lower part of the frame 12. The drive unit 18 is configured to convert pedaling force into driving force. A front wheel 20 is supported in a freely rotatable manner on the bottom end of the front fork 14, while a rear wheel 22 is supported in a freely rotatable manner on a rear part of the frame 12. Of course, the bicycle 10 can include other components as needed and/or desired.

The frame 12 is basically formed by a top tube 24, a down tube 26, a head tube 28, a seat tube 30, a pair of seat stays 32 and a pair of chain stays 34. The top tube 24 is arranged generally horizontally, while the down tube 26 is arranged below the top tube 24 such that it slants obliquely upward toward the front. The head tube 28 joins the front ends of the top tube 24 and the down tube 26 together. The seat tube 30 extends diagonally upward and joins the rear ends of the top tube 24 and the down tube 26 together.

The bicycle 10 is also provided with a seat post 36 has a saddle 38 fastened thereto. The seat post 36 is secured in the seat tube 30 such that its position can be vertically adjusted up and down. A cylindrical or tubular hanger part 40 (shown in Figure 2) is formed at a connection portion where the seat tube 30 and the down tube 26 are joined together.

The drive unit 18 basically includes a front crankset 41, a rear gear cassette unit 43, a chain 44, a front derailleur 45, and a rear derailleur 46. The front crankset 41 is provided on the bottom bracket of the bicycle 10. The rear gear cassette unit 43 is mounted in a non-rotatable manner to the free hub of the rear wheel 22. The chain 44 is arranged on the front crankset 41 and the rear gear cassette unit 43 so as to span therebetween. The front derailleur 45 and the rear derailleur 46 function as gear changing devices.

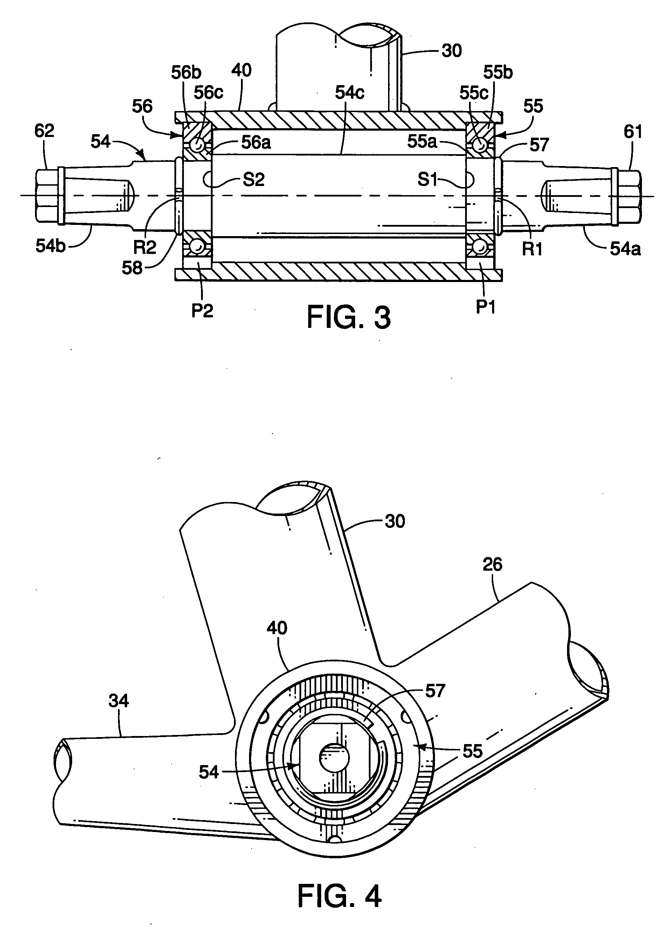

As shown in Figures 2 and 3, the front crankset 41 basically includes a crank axle assembly or bottom bracket assembly 50, a right crank arm 51, a left crank arm 52, and a pair of pedals 53 (Figure 1). The bottom bracket assembly 50 preferably has a crank axle 54 rotatably supported on the hanger part 40 of the frame 12 by a pair (left and right) of bearing unit 55 and 56 that are retained on the crank axle 54 by a pair of C-shaped retaining clips 57 and 58, respectively.

The right and left crank arm 51 and 52 are preferably fixedly coupled to the right and left ends of the crank axle 54 by a pair (left and right) of bolts 61 and 62, respectively. Of course, the right and left ends of the crank axle 54 can have other configurations for mounting the right and left crank arm 51 and 52 thereto as need and/or desired.

The crank axle 54 is preferably a rod shaped member that is highly rigid such as chrome molybdenum steel. The crank axle 54 can be either a solid member or a hollow pipe-shaped as need and/or desired. The crank axle 54 has a first axial end portion 54a, a second axial end portion 54b and a central portion 54c. The first axial end portion 54a is disposed on a first axial side of the central portion 54c, while the second axial end portion 54b is disposed on a second axial side of the central portion 54c. The central portion 54c has a larger transverse width in a radial direction than the first and second end portions 54a and 54b such that first and second axially facing abutment surfaces S1 and S2 are formed between the central portion 54c and the first and second end portions 54a and 54b, respectively. The first and second axially facing abutment surfaces S 1 and S2 are configured and arranged to limit inward axial movement of the first and second bearing units 55 and 56 when they are installed onto the first and second end portions 54a and 54b, respectively, of the crank axle 54. In the illustrated embodiment, the right and left end portions of the crank axle 54 has threaded bore for threadedly receiving the bolts 61 and 62 to secure the right and left crank arm 51 and 52.

The first axial end portion 54a has a first annular groove or recess R1 for receiving the C-shaped retaining clip 57. When the first retaining clip 57 is disposed in the first recess R1, the first bearing unit 55 is retained on the first axial end portion 54a of the crank axle 54 by the first retaining clip 57. The second axial end portion 54b has a second annular groove or recess R2 for receiving the C-shaped retaining clip 58. When the second retaining clip 58 is disposed in the second recess R2, the second bearing unit 56 is retained on the second axial end portion 54b of the crank axle 54 by the second retaining clip 58. Thus, the first bearing unit 55 is disposed on the first axial end portion 54a of the crank axle 54 at a location axially inward of the first recess R1, while the second bearing unit 56 is disposed on the second axial end portion 54b of the crank axle 54 at a location axially inward of the second recess R2. Preferably, the first and second retaining clips 57 and 58 are C-shaped, split retaining rings that are constructed of a metallic material.

The bearing units 55 and 56 include inner rings or races 55a and 56a and outer rings or races 55b and 56b with a plurality of rolling members (i.e. ball bearings) 55c and 56c disposed therebetween. In this embodiment, the left bearing unit 55 constitutes a first bearing unit and the right bearing unit 56 constitutes a second bearing unit. The first and second bearing units 55 and 56 have axial lengths that are substantially equal to an axial distance measured between the first and second axially facing abutment surfaces S1 and S2 and the first and second retaining clips 57 and 58 such that the bearing units 55 and 56 are prevented from axially moving along the crank axle 54. The outer circumferential surfaces of the outer races 55b and 56b are provided with a plurality of drainage passages or trenches P1 and P2, respectively. These drainage passages P1 and P2 are configured and arranged relative to the tubular hanger part 40 to drain water within the tubular hanger part 40. The drainage passages P1 and P2 are preferably axially extending grooves that are formed in an outer circumferential surface of the outer races 55b and 56b with the grooves extending from an outwardly facing edge surface of the outer races 55b and 56b to an inwardly facing edge surface of the outer races 55b and 56b. While three drainage passages P1 and P2 are illustrated it will be apparent to those skilled in the bicycle art that only one drainage passage is needed for this feature of the present invention. Thus, it will be apparent to those skilled in the bicycle art that fewer or more than three drainage passages can be provided in the outer races 55b and 56b.

The bearing units 55 and 56 are preferably sealed industrial bearings where seals are mounted between the inner rings 55a and 56a and the outer rings 55b and 56b, respectively, and grease is inserted in the bearing units 55 and 56 in advance. Therefore, maintenance of the bearing units 55 and 56 for lubrication can be omitted.

When the bottom bracket assembly 50 of the present invention as described above is mounted on the hanger part 40, first, one of the bearing units 55 and 56 is mounted on the crank axle 54 using one of the retaining clips 57 and 58. In this state, the end of the crank axle 54 that is free of a bearing is press-fitted into the one end of the hanger part 40. Then, the other one of the bearing units 55 and 56 is mounted on the other end of the crank axle 54 so as to be seated in the other end of the hanger part 40. Finally, the other one of the retaining clips 57 and 58 is installed on the crank axle 54 to complete the installation of the bottom bracket assembly 50.

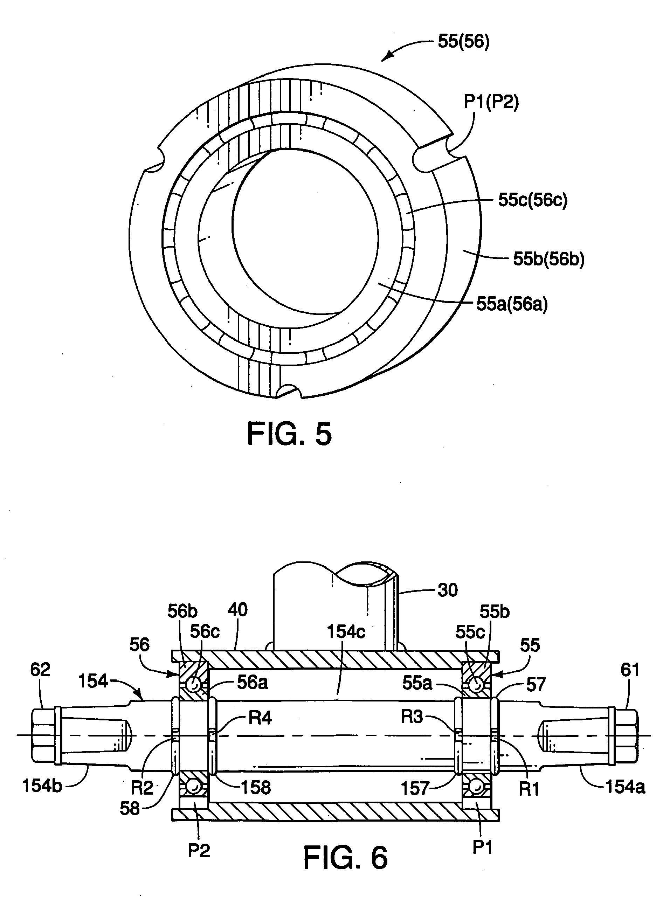

Alternatively, as illustrated in Figure 6, the bearing units 55 and 56 can be used with a modified crank axle 154 to form a bottom bracket assembly 150 in accordance with a second embodiment of the present invention. Basically, the modified crank axle 154 is identical to the crank axle 54, except that third and fourth annular grooves or recesses R3 and R4 for receiving another pair of C-shaped retaining clips 157 and 158 have been added to retain the bearing units 55 and 56 against axial movement. In view of the similarity between the first and second embodiments, the descriptions of the parts of the second embodiment that are identical to the parts of the first embodiment may be omitted for the sake of brevity. In other words, unless otherwise specified, the configuration of the bottom bracket assembly 150 of the second embodiment is the same as the configuration of the first embodiment.

The crank axle 154 has a first axial end portion 154a, a second axial end portion 154b and a central portion 154c. Similar to the first embodiment, the first and second axial end portions 154a and 154b have first and second recesses R1 and R2, respectively. The third and fourth recesses R3 and R4 are formed in the first and second axial end portions 154a and 154b, respectively, and to define the ends of the central portion 154c. Thus, the third and fourth recesses R3 and R4 are configured and arranged at locations axially inward of the first and second recesses R1 and R2 that receive the C-shaped retaining clips 57 and 58. The third and fourth annular grooves or recesses R3 and R4 are configured and arranged to receive the C-shaped retaining clips 157 and 158, respectively, such that the first and second axially facing abutment surfaces S1 and S2 can be eliminated.

The first and second bearing units 55 and 56 have axial lengths that are substantially equal to an axial distance measured between the first and second retaining clips 57 and 58 and the third and fourth retaining clips 157 and 158, respectively. Accordingly, with this arrangement, the first and second bearing units 55 and 56 are prevented from axially moving along the crank axle 154. In the embodiment illustrated in Figure 6, the central portion 154c of the crank axle 154 does not need to be larger in a radial transverse width than the first and second end portions 154a and 154b due to the use of the third and fourth retaining clips 157 and 158.

As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle bottom bracket assembly comprising:
a crank axle having a central portion, a first axial end portion with a first recess disposed on a first side of the central portion and a second axial end portion with a second recess disposed on a second side of the central portion;
a first bearing unit disposed on the first axial end portion of the crank axle at a location axially inward of the first recess;
a second bearing unit disposed on the second axial end portion of the crank axle at a location axially inward of the second recess;
a first retaining clip disposed in the first recess and configured to retain the first bearing unit on the first axial end portion of the crank axle; and
a second retaining clip disposed in the second recess and configured to retain the second bearing unit on the second axial end portion of the crank axle.

2. The bicycle bottom bracket assembly according to claim 1, wherein
the central portion has a larger transverse width than the first and second end portions such that first and second axially facing abutment surfaces are formed between the central portion and the first and second end portions, respectively.

3. The bicycle bottom bracket assembly according to claim 2, wherein
the first and second bearing units have axial lengths that are substantially equal to an axial distance measured between the first and second axially facing abutment surfaces and the first and second retaining clips, respectively, such that the first and second bearing units are prevented from axially moving along the crank axle.

4. The bicycle bottom bracket assembly according to any one of claims 1 to 3, wherein
the first and second recesses are annular grooves.

5. The bicycle bottom bracket assembly according to any one of claims 1 to 4, wherein
the first and second retaining clips are C-shaped, split retaining rings.

6. The bicycle bottom bracket assembly according to any one of claims 1 to 5, wherein
each of the first and second bearing units includes an outer race, an inner race and a plurality of rolling members disposed between the outer and inner races.

7. The bicycle bottom bracket assembly according to any one of claims 1 to 6, wherein
the first axial end portion of the crank axle further includes a third recess disposed at a location axially inward of the first recess, and
the second axial end portion of the crank axle further includes a fourth recess disposed at a location axially inward of the second recess;
the bicycle bottom bracket assembly further comprising a third retaining clip disposed in the third recess, and a fourth retaining clip disposed in the fourth recess.

8. The bicycle bottom bracket assembly according to claim 7, wherein
the first and second bearing units have axial lengths that are substantially equal to an axial distance measured between the first and second retaining clips and the third and fourth retaining clips respectively such that the first and second bearing units are prevented from axially moving along the crank axle.
